Europäisches Patentamt

European Patent Office

Office européen des brevets

(19)

(11) Numéro de publication: **0 286 559 B1**

(12) **FASCICULE DE BREVET EUROPEEN**

(45) Date de publication de fascicule du brevet: **30.09.92**   (51) Int. Cl.⁵: **B62J 1/00**, B62J 1/18

(21) Numéro de dépôt: **88440029.2**

(22) Date de dépôt: **08.04.88**

(54) **Selle à appui musculaire fessier.**

(30) Priorité: **09.04.87 FR 8705176**

(43) Date de publication de la demande:
**12.10.88 Bulletin  88/41**

(45) Mention de la délivrance du brevet:
**30.09.92 Bulletin  92/40**

(84) Etats contractants désignés:
**AT BE CH DE ES GB GR IT LI LU NL SE**

(56) Documents cités:
**FR-A- 327 562        FR-A- 2 359 022**
**US-A- 2 613 722      US-A- 3 863 978**
**US-A- 3 970 345      US-A- 4 098 537**

(73) Titulaire: **Beylet, Daniel**
**8, rue de Berne**
**F-67310 Wasselonne(FR)**

Titulaire: **Haushalter, Gérard**
**3, rue de Bourgogne**
**F-67540 Ostwald(FR)**

(72) Inventeur: **Beylet, Daniel**
**8, rue de Berne**
**F-67310 Wasselonne(FR)**
Inventeur: **Haushalter, Gérard**
**3, rue de Bourgogne**
**F-67540 Ostwald(FR)**

(74) Mandataire: **Metz, Paul**
**CABINET METZ PATNI 63, rue de la Ganzau**
**B.P. 63**
**F-67024 Strasbourg(FR)**

EP 0 286 559 B1

Rank Xerox (UK) Business Services

## Description

La présente invention se rapporte à une selle de hautes performances à appui musculaire fessier pour le cyclisme, notamment sportif comme énoncée dans la première partie de la revendication 1 (FR-A-327 562).

Le but de la compétition est d'augmenter constamment les performances des sportifs.

Pour ce faire, la forme physique compte beaucoup, mais il y a lieu de considérer également la qualité et l'adaptation des moyens employés par le sportif dans la pratique de tel ou tel sport.

Il en est ainsi du sport cycliste en constante évolution pour lequel de multiples études conduisent actuellement à des accessoires de forme aérodynamique à fixer en divers endroits du vélo ou à porter sur soi.

Paradoxalement, la selle n'a pas fait l'objet d'une attention particulière car vraisemblablement elle ne semblait pas jouer un rôle déterminant dans l'amélioration des performances sportives.

Les études et essais liés à la présente invention prouvent précisément le contraire. La selle joue un rôle de premier plan dans l'efficacité du travail de pédalage car elle participe, par sa force de réaction, à une meilleure assurance et une meilleure efficacité dans le mouvement.

Le pédalage sur une selle entraîne un mouvement de translation de l'ensemble hanche-bassin-fessier d'environ 6 cm d'amplitude sous la forme de tracé d'un huit déplié ou replié selon le style, la taille et la conformation du coureur, mouvement qui provoque des frottements au niveau du périnée, un très grand déplacement du genou dans l'espace et une ouverture de l'angle d'extension maximale du genou supérieure à 165°-170° où a lieu le syndrome d'hypertension fonctionnel externe de la rotule.

Des études approfondies sur la biomécanique du genou du cycliste et son rôle dans l'aisance du mouvement et la diminution de la fatigue ont été effectuées par des professionnels de la médecine du sport.

Ces études montrent l'importance considérable de la selle dans l'assurance et l'efficacité du mouvement et la fatigue moindre dans la sensation et la persistance de l'effort physique neuro-musculaire.

Le rôle de la selle dépasse celui de la simple assise. Il se prolonge non seulement dans toute la phase d'appui mais également de flexion du membre inférieur.

Les conclusions de ces études sont identiques, les performances du cycliste peuvent être notablement améliorées en adoptant des positions de travail optimales en liaison avec des zones d'appui parfaitement conformées et proportionnées à l'anatomie du coureur, et correctement disposées par rapport aux masses musculaires sollicitées.

L'effort musculaire pourrait ainsi s'amplifier notablement, gagner en efficacité et se renouveler régulièrement sans fatigue excessive.

En effet, la position de travail du coureur ne peut être comparée à la simple position assise d'une personne. Ainsi le maintien dorsal par un rebord vertical arrière relevé ou dosseret comme décrit dans le brevet américain n° 3,970,345 au nom de Sthephen HOLCOMB ne peut se justifier que pour des raisons d'entretien d'un confort d'assise dans un usage strict de promenade plutôt que de favoriser l'effort.

De même, un simple rebord de butée, fixe ou amovible, monté à l'extrémité de la selle à la manière d'un dossier ne peut donner satisfaction.

Ainsi, des selles telles que décrites dans les brevets suisse n° 221782 au nom de William DUCRET et français n° 1081145 au nom d'Edmond COMBECAVE ont pour seul but d'empêcher le glissement de l'assise du cycliste vers l'arrière. Selon les caractéristiques décrites et représentées, la simple barrière ainsi constituée destinée à bloquer le déplacement horizontal du bassin vers l'arrière ne peut jouer son rôle en raison de la trop faible hauteur de cette butée. Par contre, elle se montre source de gêne et de désagrément, voire d'accident(s) risquant d'handicaper et de meurtrir le cycliste dans la région fessière.

Il en est de même, à bien moindre échelle, pour la selle décrite dans le brevet américain n° 4,098,537 au nom de David JACOBS dans laquelle le rebord référencé 40, d'ordre plus esthétique que technique, ne joue qu'un rôle de butée illusoire.

Par ailleurs, la selle de confort telle que décrite dans le brevet français n° 327562 au nom de René COUETOUX n'a été concue que pour procurer des avantages d'agrément, de confort et de stabilité d'assise. En effet, la forme biconvexe de l'assise semble particulièrement bien adaptée à la conformation anatomique de l'usager dans le seul but de son confort. Ces buts ressortent particulièrement bien à la lecture de la description et à l'observation des figures. Le rebord enveloppant avec deux retours symétriques vers l'avant, les cavités symétriques en creux et la saillie longitudinale centrale sont autant d'éléments et de conformations de confort en complète contradiction avec la recherche de performances.

La présente invention a pour but de remédier aux différents inconvénients des selles connues.

A cet effet elle concerne une selle de hautes performances à appui musculaire fessier visant l'amélioration notable des résultats sportifs des cyclistes et se caractérise comme précisée dans la revendication 1 en ce que la structure transversale d'appui qu'elle possède à son extrémité arrière est un rebord anatomique relevé galbé vers l'avant, formé d'une seule pièce avec le corps de la selle, se raccordant progressivement à celui-ci et se poursuivant selon une direction générale perpendiculaire, ledit rebord d'appui relevé présentant un relief symétrique à coin supérieur médian et à deux concavités de raccordement s'étendant de part et d'autre d'une ligne médiane en saillie, relief se développant vers le haut à partir de la zone de raccordement ou naissance du rebord relevé avec le corps de la selle.

La selle proposée par la présente invention confère de nombreux avantages dans le domaine du sport cycliste de haut niveau dont on citera ci-après les principaux à titre d'exemple :

. augmentation importante des performances sportives ;

. rendement biomécanique nettement amélioré ;

. frottement minimum permettant la persistance de l'effort maximal pendant une longue durée sans douleur de contact ;

. forme ergonomique particulièrement bien adaptée au type de mouvement permettant de diminuer la fatigue et la sensation de fatigue ;

. facilité de réalisation par moulage ;

. réduction jusqu'à 50 % des frottements du périnée ;

. on ménage, à performances égales, le genou autant à court terme en réduisant les risques de tendinite qu'à long terme en réduisant les chondropathies rotuliennes qui imposent l'arrêt d'une carrière de cycliste ;

. elle permet d'éviter tous les inconvénients de la position dite " en bec de selle ".

. le laminage urétral est notablement réduit sinon supprimé ;

. la moindre extension maximale du genou et la meilleure contribution de l'ensemble fonctionnel hanche-bassin à la propulsion réduisent les points morts dits "de tête de bielle " pour rendre les phases de flexion plantaire ou dorsale du pied activement propulsives.

L'invention a pour but de réaliser et de conserver pendant toute la durée du travail de pédalage un appui optimal d'effort dépourvu de contraintes physiques en vue d'améliorer nettement les performances sportives des coureurs.

La présente invention sera bien comprise à la lecture de la description qui suit, effectuée à titre d'exemple non limitatif sur un mode d'exécution en référence aux dessins accompagnants dans lesquels :

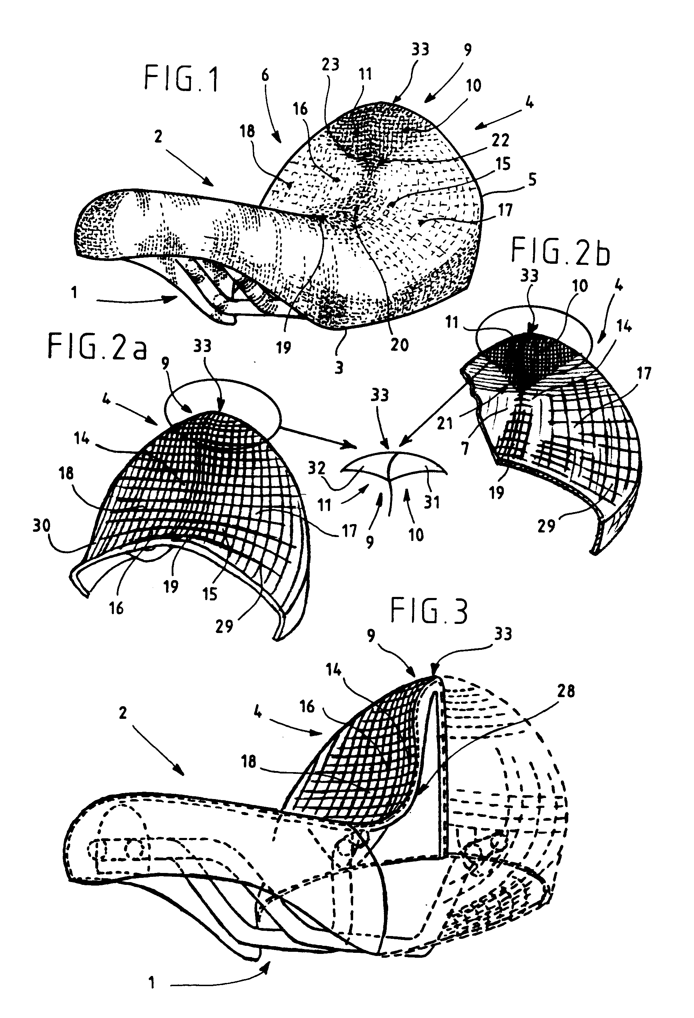

. la figure 1 est une vue en perspective prise de l'avant de la selle selon l'invention avec en agrandissement une vue schématique partielle en perspective illustrant le relief frontal du rebord postérieur ;

. les figures 2a et 2b sont des vues schématiques partielles simplifiées du rebord postérieur vu de l'avant illustrant la forme "en epsilon" avec agrandissment du coin supérieur médian ;

. la figure 3 est une vue en perspective prise de l'avant et coupée longitudinalement montrant par transparance la conformation de surface du rebord postérieur vu de l'avant ;

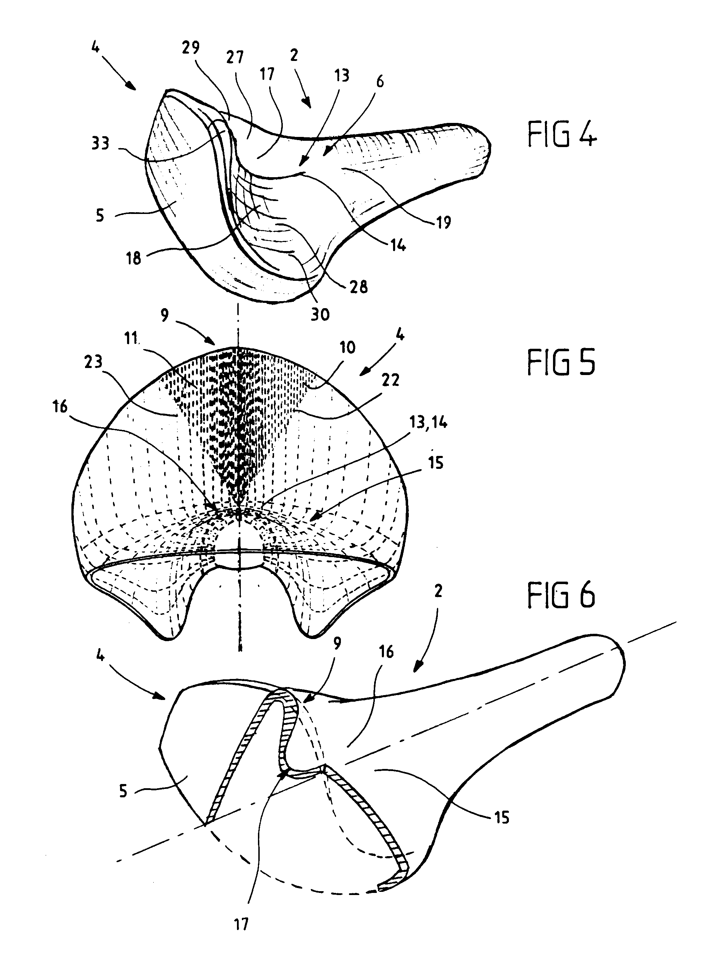

. la figure 4 est une vue en perspective prise de l'arrière de la selle selon l'invention ;

. la figure 5 est une vue schématique simplifiée du rebord postérieur selon l'invention vu de l'arrière montrant la forme "en epsilon" ;

. la figure 6 est une vue en perspective prise de l'arrière montrant par un écorché la conformation de courbure du rebord rehaussé vu de l'arrière ;

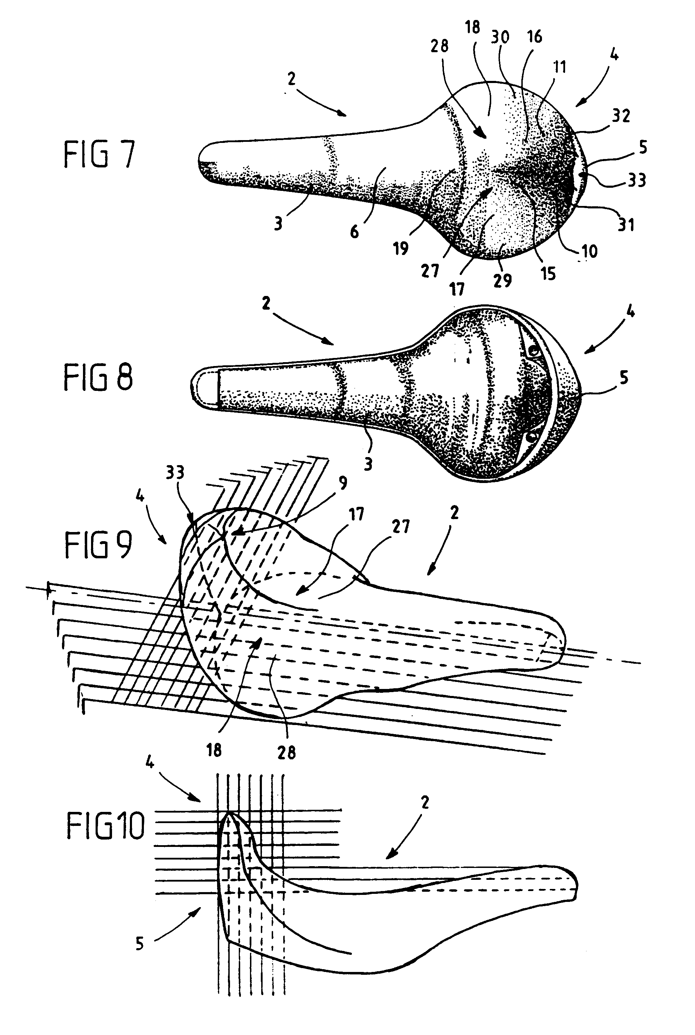

. la figure 7 est une vue en plan de dessus ;

. la figure 8 est une vue en plan de dessous ;

. les figures 9 et 10 sont des vues en perspective et de profil montrant, par des lignes en pointillés et par des coins transparents, les niveaux des plans des coupes horizontales, verticales longitudinales puis verticales transversales ;

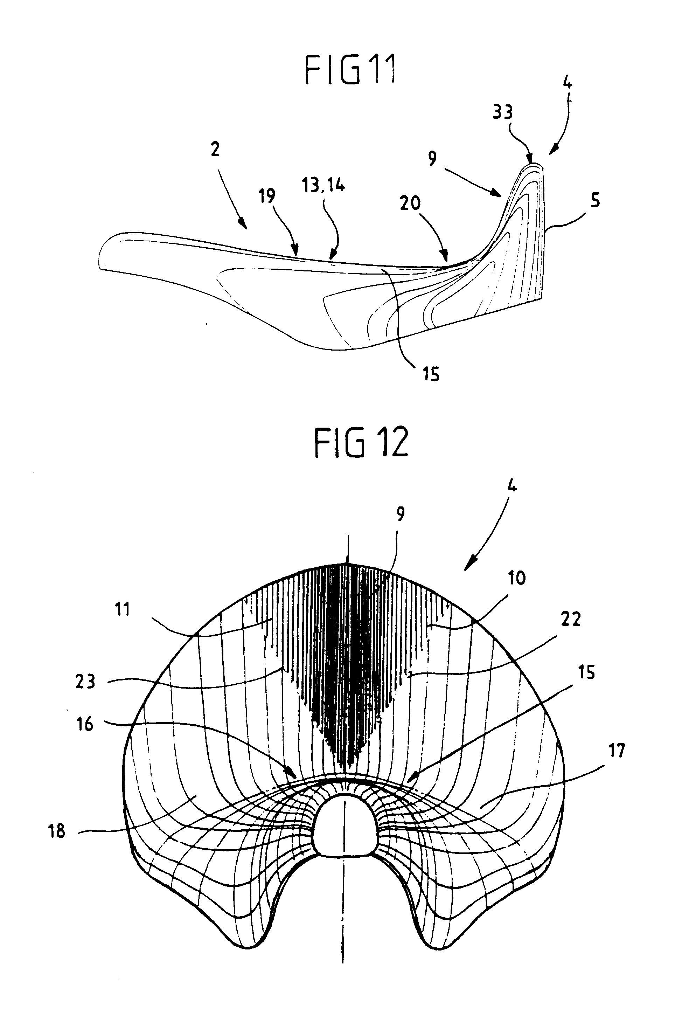

. la figure 11 est une vue en coupes multiples successives verticales longitudinales illustrant la structure longitudinale de la selle ;

. la figure 12 est une vue en coupes multiples successives verticales transversales illustrant la structure transversale de la selle ;

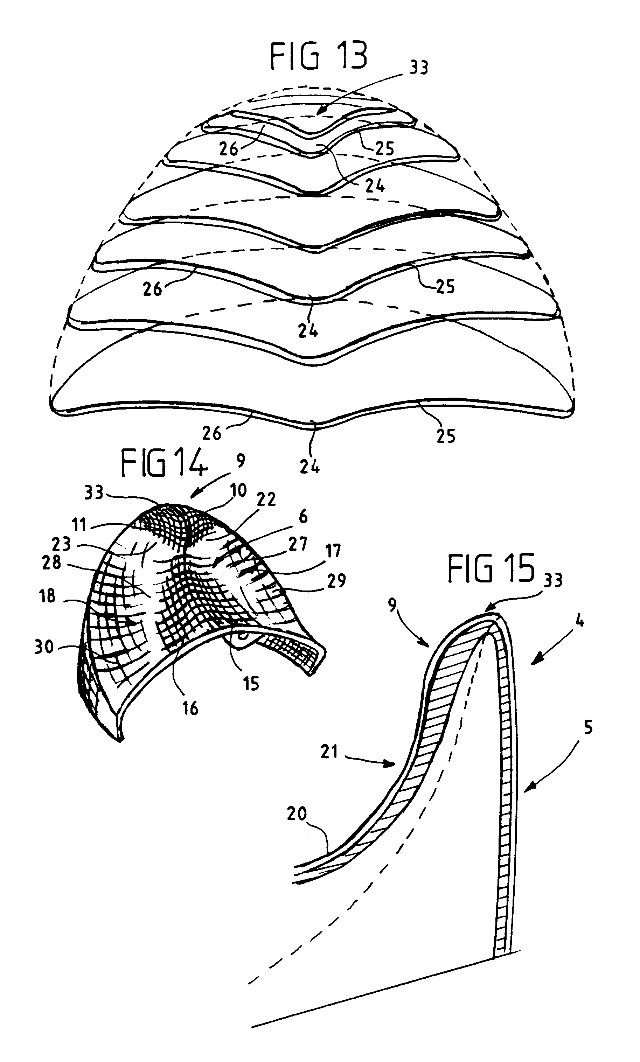

. la figure 13 est une vue en coupes multiples successives horizontales à travers le rebord selon l'invention illustrant sa structure verticale et la répétition de la forme "en epsilon";

. la figure 14 est une vue en perspective simplifiée de la partie arrière de la selle montrant par une succession de traits les cavités et les saillies du relief ;

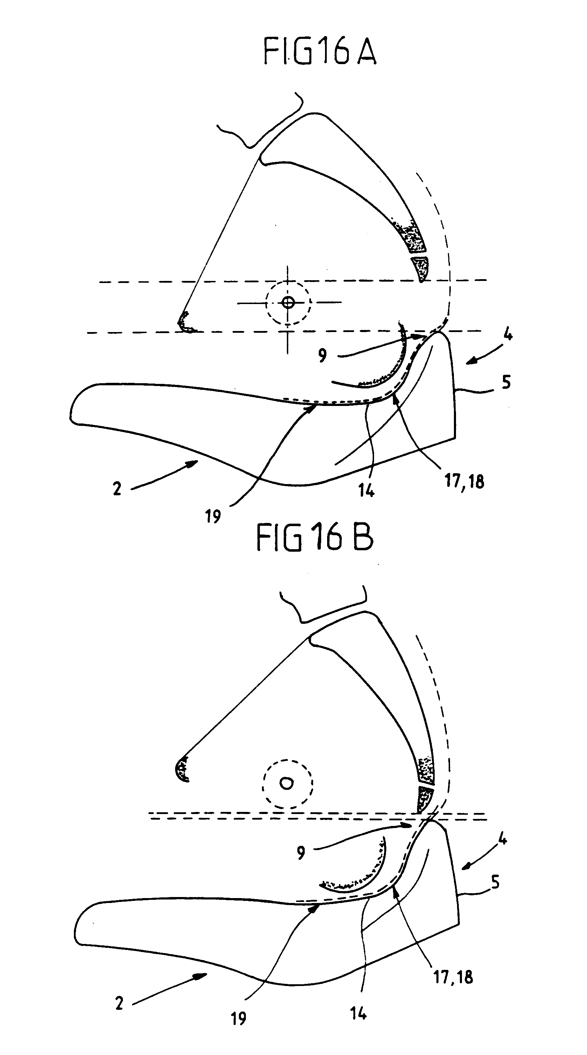

. la figure 15 est une vue en coupe longitudinale du rebord relevé selon l'invention montrant le coin médian supérieur ;

. les figures 16a et 16b, sont des vues en coupe verticale médiane d'un bassin en position respectivement accroupie puis relevée ;

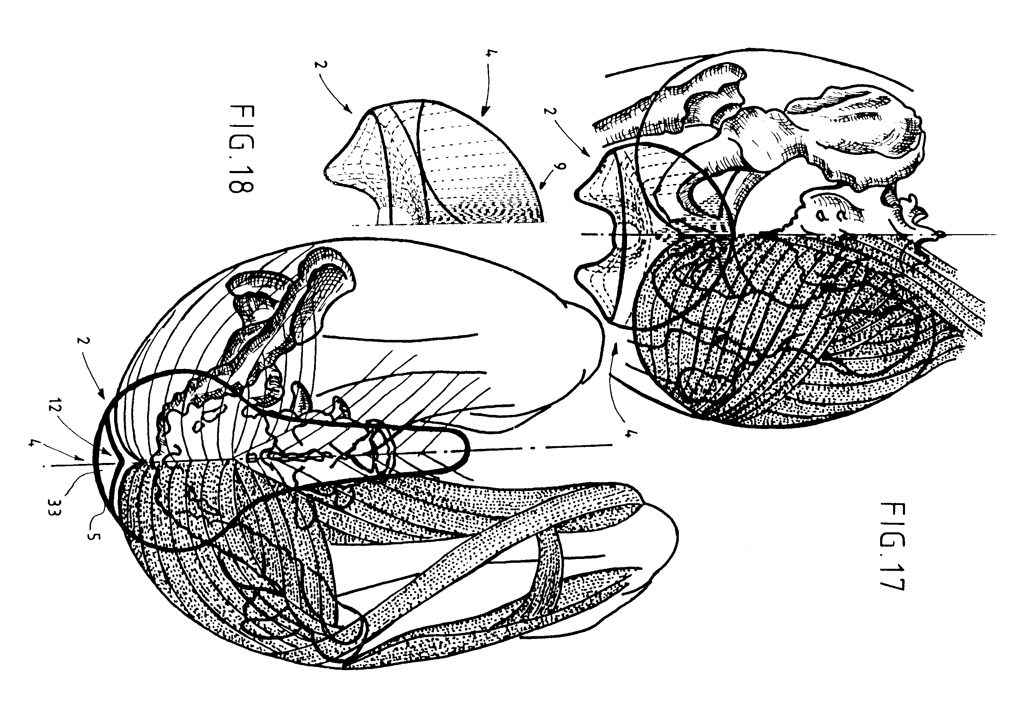

. les figures 17 et 18 sont des vues en transparence, respectivement coureur vu de dos et en plan, montrant le calage fessier, la déformation des muscles et les emplacements des os du bassin du cycliste assis sur la selle selon l'invention, avec agrandissement de la demi-partie de gauche pour la selle (figure 17) et jambe de droite inclinée et jambe de gauche droite en extension (figure 18);

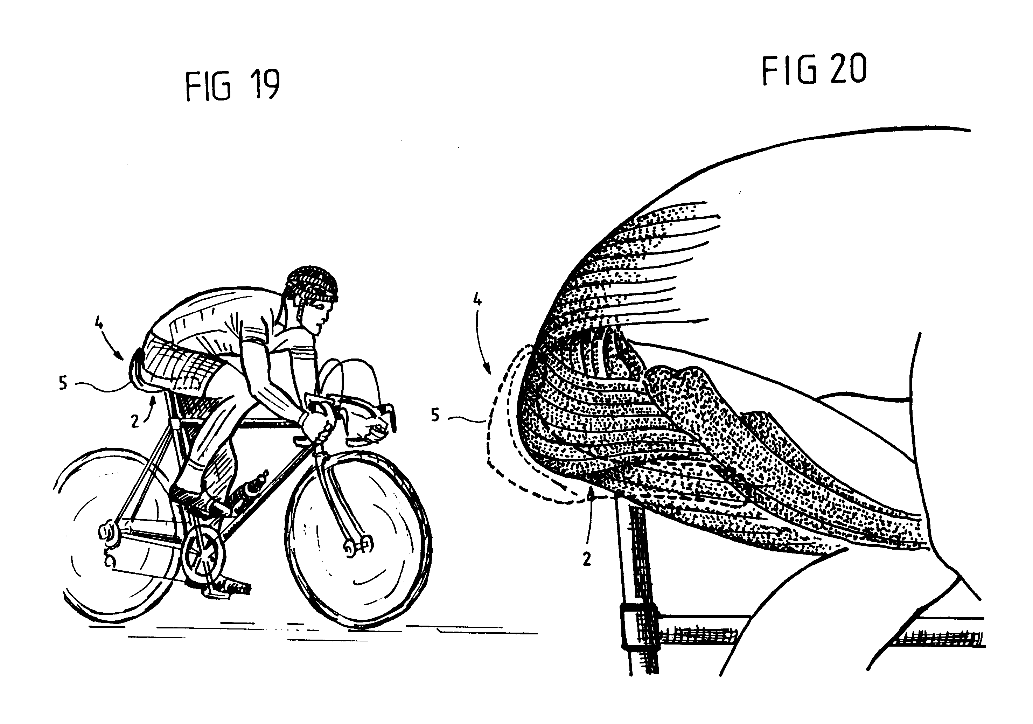

. la figure 19 est une vue générale en perspective illustrant la position du coureur sur son vélo en cours d'effort ;

. la figure 20 est une vue correspondante en perspective agrandie au niveau de la selle montrant les masses musculaires du fessier et sa position de calage ;

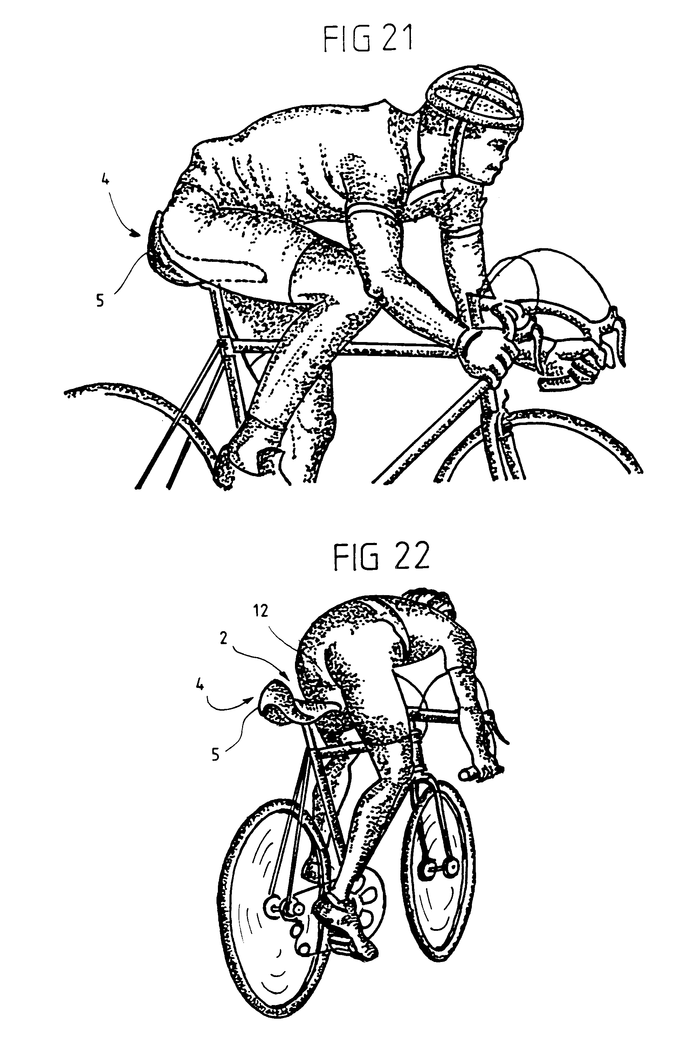

. les figures 21 et 22 sont des vues en perspective illustratives d'un coureur au travail sur son vélo, respectivement assis et relevé ;

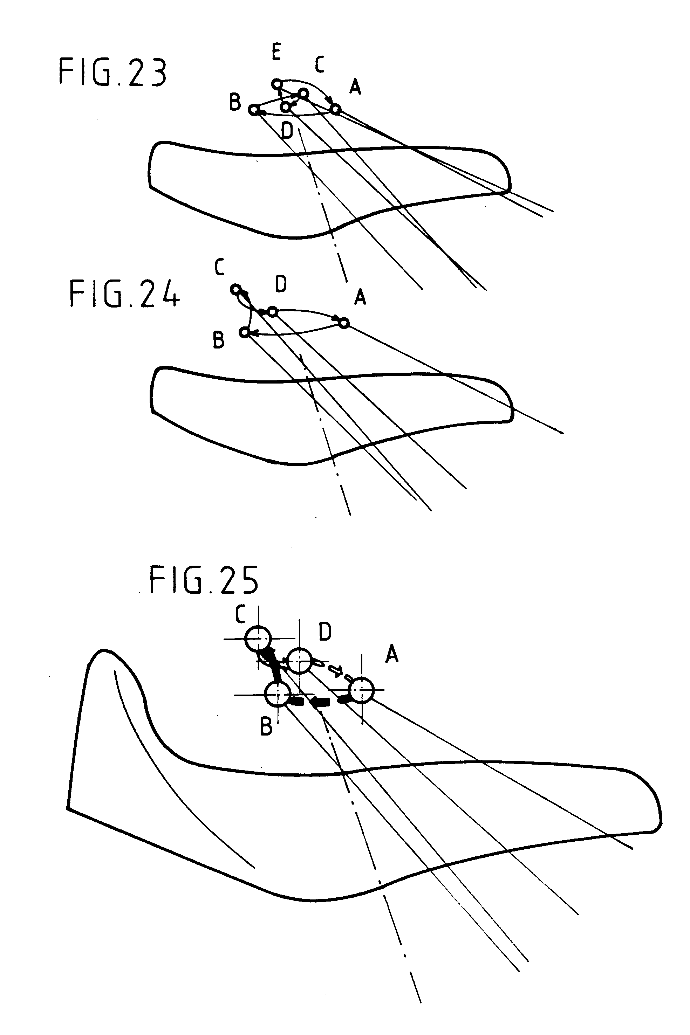

. les figures 23, 24 et 25 sont des schémas comparatifs reproduisant le diagramme de profil du mouvement apparent du grand trochanter pour montrer le travail de l'ensemble hanche-bassin respectivement sur une selle classique selon un tracé en huit respectivement replié et déplié à échelle réduite et le tracé, à plus grande échelle, du diagramme unique avec la selle à rebord postérieur relevé selon l'invention ;

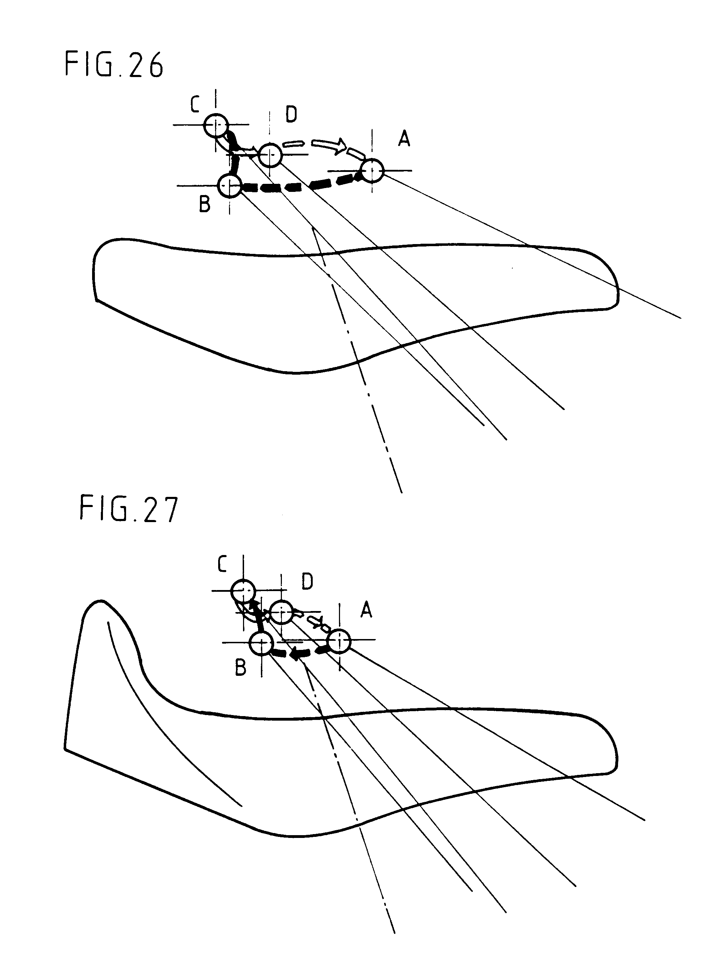

. les figures 26 et 27 sont des vues analogues aux figures 24 et 25 à même et plus grande échelle montrant la réduction d'amplitude des mouvements entre une selle classique et la selle à rebord postérieur relevé selon l'invention ;

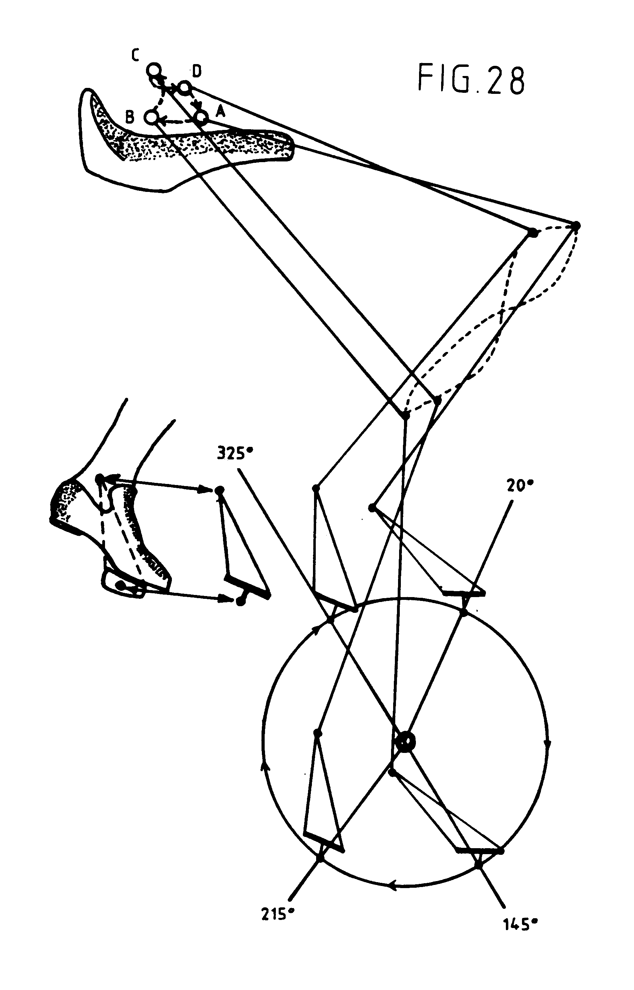

. la figure 28 est le schéma explicatif complet montrant le mouvement des cuisses, des jambes et des pieds jusqu'au niveau du pédalier du diagramme de profil du grand trochanter ;

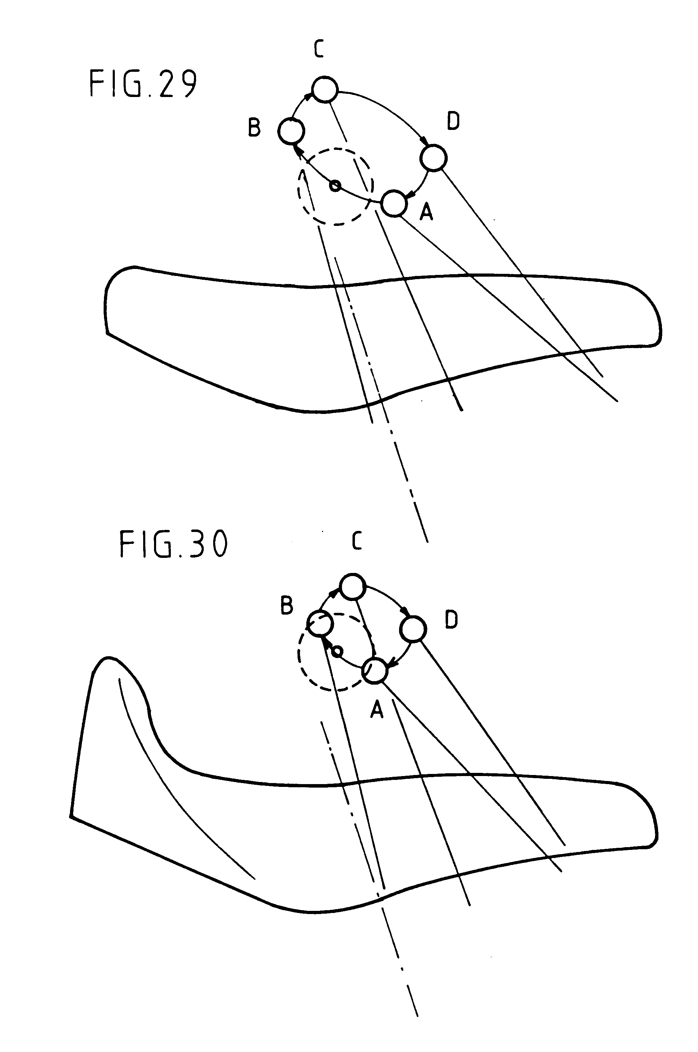

. les figures 29 et 30 sont des schémas comparatifs montrant les diagrammes de profil du mouvement apparent du milieu de la tête fémorale lors du mouvement de pédalage respectivement avec une selle classique et avec la selle à rebord postérieur relevé selon l'invention .

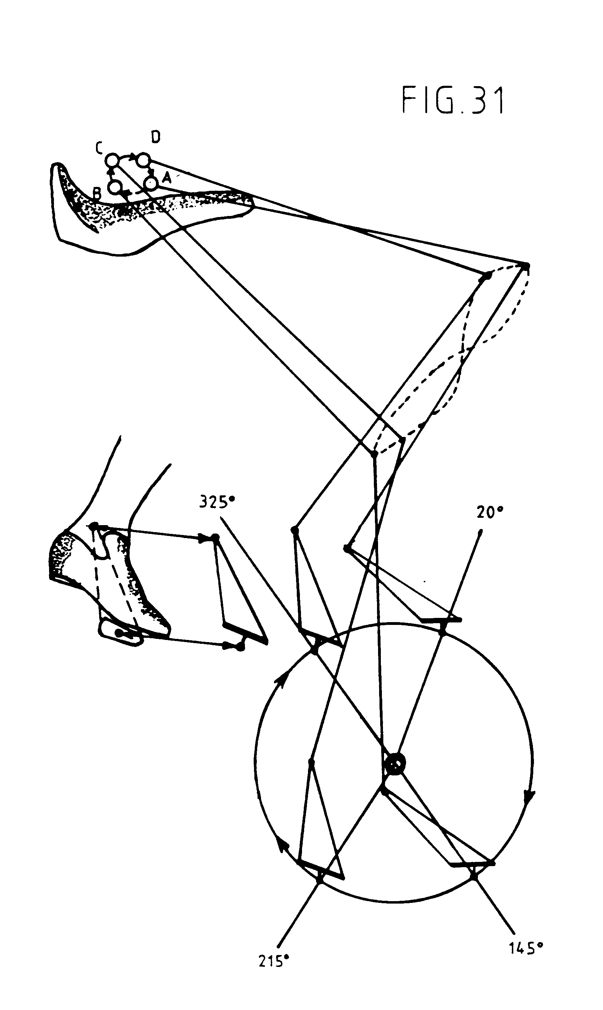

. la figure 31 est le schéma explicatif complet montrant les mouvements des cuisses, des jambes et des pieds jusqu'au niveau du pédalier, du diagramme de profil du milieu de la tête fémorale.

Comme indiqué, la selle selon l'invention a pour but d'améliorer nettement les performances des cyclistes sportifs à l'entraînement et en compétition.

Elle résulte de nombreuses études et essais effectués par les inventeurs.

L'idée générale inventive consiste à incurver vers le haut et à rehausser la partie postérieure d'une selle de vélo de sport ou de compétition par un rebord anatomique de conformation enveloppante optimale longitudinale et transversale, à relief de calage longitudinal et transversal, de manière à confectionner un appui fessier adapté à la morphologie du coureur en vue d'obtenir le calage-enveloppement longitudinal et transversal nécessaire à la bonne assise, à l'assurance du mouvement, à l'efficacité de l'effort et à la réduction notable de la fatigue induite par les frottements et leur nuisance directe au niveau de la peau et de l'usure des articulations.

La selle selon la présente invention se compose d'un châssis 1 supportant le corps de selle constitué d'une coque 2 recouverte d'un revêtement souple 3. La coque 2, réalisée par exemple par moulage dans une matière synthétique, présente une partie postérieure relevée d'une seule pièce avec la coque 2 c'est-à-dire réalisée par moulage dans le même moule.

La coque est ainsi conformée à l'arrière selon un rebord postérieur anatomique 4 relevé. Les formes générales et particulières de ce rebord anatomique et celles de la zone de raccordement avec le corps proprement dit de la selle seront décrites ci-après et représentées en détail sur les figures annexées.

Comme indiqué, le rebord anatomique 4 fait partie intégrante de la coque. Il constitue une butée de calage sur laquelle s'appuient directement les muscles actifs du fessier dans leur partie arrière et indirectement le saccro-coccyx par les masses musculaires et les structures ligamentaires. Le bassin est ainsi limité dans son déplacement vers l'arrière par la réaction des structures musculaires et ligamentaires qui le lient aux parties postérieures des ischions.

Il a pour but de bloquer le recul de l'ensemble hanches-bassin et de réaliser un appui avec calage-enveloppement aussi bien transversalement que longitudinalement.

Comme il ressort des figures, le rebord postérieur anatomique 4 est dirigé suivant une direction générale perpendiculaire au plan d'assise. Il présente un profil 5 de forme générale légèrement galbée vers l'avant pour suivre les lignes générales de la naissance du dos du coureur dans sa position accroupie de travail.

Selon une autre caractéristique, le rebord postérieur relevé 4 constitue sur la selle une zone de plus grosse épaisseur assurant la rigidité d'ensemble et sa fixation avec le châssis.

Plus précisément, le front avant du rebord postérieur relevé 4, c'est-à-dire la partie regardant l'avant de la selle, présente un relief symétrique en creux et en saillies formé d'une zone médiane longitudinale 6 se développant en saillie selon une ligne de crête 7 terminée vers le haut par une saillie incurvée 8 formant un coin supérieur médian 9 à flancs ou versants symétriques convexes 10 et 11 de courbures progressives et variables, coin s'évasant du bas vers le haut jusqu'à son raccordement avec le pourtour adjacent du rebord relevé. Ce coin supérieur médian 9 a pour but d'immobiliser latéralement le bassin en constituant un appui symétrique pour l'espace supérieur médian interfessier 12 selon un profil biconvexe de conformation anatomique transversale et longitudinale comme le montre plus particulièrement la figure 18.

La zone médiane longitudinale 6 se prolonge vers l'extrémité avant de la selle par une portion intermédiaire 13 en forme de crête 14 raccordée par deux versants légèrement bombés concaves 15 et 16 à des concavités adjacentes d'appui 17 et 18 s'étendant de part et d'autre de ladite zone longitudinale médiane 6 jusqu'aux lignes du contour adjacent du rebord anatomique relevé 4 et à une zone de raccordement 19 avec le corps de la selle. La crête 14 se poursuit jusqu'à la tige de la selle à partir d'une zone arrière médiane de transition 20 s'évasant progressivement pour se transformer en un volume symétrique 21 à deux pentes 22 et 23 convexes constituant la naissance inférieure du coin supérieur médian 9.

Comme représenté sur les figures, le profil de coupe du coin supérieur médian 9 affecte la forme générale en relief de la lettre grecque "epsilon" symétrique ou du chiffre arabe "trois" disposé couché transversalement à l'axe longitudinal de la selle, sa branche centrale dirigée vers l'avant de la selle.

Cette caractéristique ressort mieux et plus particulièrement de la figure 13 sur laquelle le rebord postérieur selon l'invention a été représenté coupé en tranches parallèles au plan d'assise de la selle. Chaque tranche de coupe présente, de profil, cette forme générale. Pour respecter les variations de courbure du relief, les formes successives des tranches de coupe vont en s'évasant progressivement du haut vers le bas. Ce type de représentation permet de définir et de reconstituer complètement le relief du rebord relevé 4.

Ainsi qu'il a été précédemment décrit, les formes techniques du coin médian supérieur 9 sont progressivement saillantes vers le haut. Cette caractéristique apparaît sur chaque tranche de coupe dont la forme en "epsilon" présente une pointe 24 et des branches symétriques 25 et 26 s'évasant progressivement vers le bas simultanément à leur augmentation de grandeur jusqu'à se confondre à la limite de la zone de raccordement 19 avec le corps de la selle.

Les concavités d'appui 17 et 18 s'étendent de part et d'autre de la zone médiane longitudinale 6 et présentent une forme générale légèrement en creux constituant chacune dans leur partie centrale une zone en cuvette 27 et 28, de faible profondeur, dont les surfaces de pourtour 29 et 30 constituent autant de zones progressives de raccordement par variation de courbure avec les éléments adjacents du relief : zone médiane longitudinale 6, bases du coin supérieur médian 9, contours extérieurs du rebord relevé 4, zone de raccordement 19 avec le corps de la selle et autres.

Selon une variante, le fond des cuvettes et leur pourtour affectent une forme générale anatomique adaptée à servir de logement à chaque ischion enveloppé de façon dynamique par les muscles fessiers en action.

Selon une autre variante, le fond de chaque concavité d'appui 17 et 18 s'étend depuis la zone de raccordement 19 avec le corps de la selle et se prolonge vers le haut.

Les axes des fonds de cuvettes 27 et 28 ne sont pas dirigés parfaitement vers le haut à la manière des selles de confort qui en possèdent. Au contraire, les axes de fonds de cuvette sont légèrement inclinés vers le bas par rapport à la verticale de manière à constituer un support de calage idéal pour chaque groupe de muscles fessiers dans la position de travail du coureur. On réalise ainsi un premier calage.

Le calage complémentaire provient des zones supérieures des concavités de butée conformées dans le front du rebord anatomique 4 constituant la prolongation vers le haut des cuvettes.

La selle procure également un calage transversal par l'intermédiaire du coin supérieur médian 9 ainsi qu'il ressort clairement des figures et plus particulièrement de la figure 18. Ce calage transversal résulte de l'appui-calage de l'espace interfessier sur et de part et d'autre dudit coin 9.

Cette caractéristique évite le glissement-balancé alternatif résultant des mouvements répétitifs de pédalage. Elle procure aussi une meilleure stabilité transversale très appréciable pour une meilleure assise dans tous les cas de soubresauts et de trépidations provenant de la route, de la piste ou du chemin.

L'effet technique est obtenu par les résultats provenant de la coopération des moyens indiqués ci-dessus.

Les cuvettes assurent le calage d'appui complété vers le haut par un calage-butée sur lequel portent des muscles actifs en compression. Ce calage composite appelé calage-enveloppement permet à la selle selon l'invention d'assurer les meilleurs résultats dans le rendement de l'effort et la résistance à la fatigue.

Le coin médian supérieur 9 est délimité en partie supérieure par des arêtes curvilignes de raccordement 31 et 32 convergeant vers la pointe du coin médian supérieur 9 et rejoignant progressivement la ligne de contour du rebord selon l'invention. Les arêtes 31 et 32 délimitent avec la portion adjacente du contour extérieur du rebord en espace supérieur de raccordement 33 légèrement bombé de forme générale triangulaire.

Comme on le distingue clairement sur les vues en perspective et sur la vue en coupes horizontales multiples du rebord postérieur relevé (figure 13), le rebord anatomique réalise par réaction musculaire et ligamentaire sur le coin médian supérieur 9 et son espace de raccordement supérieur un appui supplémentaire indirect qui se répercute sur le saccro-coccyx.

Les figures de 23 à 27 montrent de façon comparative les amplitudes des mouvements apparents du grand trochanter lors du travail de pédalage avec une selle classique et avec la selle selon l'invention.

Sur ces figures, les lignes inclinées montrent les directions générales de la cuisse à différents stades. On le comprendra mieux à l'observation des figures 28 et 31 qui montrent le membre moteur dans son ensemble. Sur ces figures, les lettres A, B, C, D et E désignent les différentes positions caractéristiques du mouvement de pédalage correspondant aux positions du pied lors d'une révolution de la pédale :

A : début de la phase d'appui, 20° d'inclinaison

B : fin de la phase d'appui, 145° d'inclinaison

C : fin de la phase de transition dynamique de la zone inférieure, 215° d'inclinaison

D : fin de la phase de tirage, 325° d'inclinaison

E : (variante) transition dynamique de la zone supérieure.

Ces positions caractéristiques correspondent aux mouvements suivants :

A - B :
extension du membre inférieur

B - C :
flexion plantaire du pied

C - D :
flexion du membre inférieur

(D - E) :
poursuite de la flexion du membre inférieur

D - A et E - A :
flexion dorsale du pied.

Sur tous les schémas, les lettres désignent indifféremment les positions, soit du relief externe du grand trochanter (figures 23 à 28 et 31), soit du milieu de la tête du fémur radiologiquement détecté.

On remarque tout d'abord de façon générale que les disparités des formes de diagramme en huit replié (figure 23) et en huit déplié (figure 24), fonction du style, de la taille et de la conformation des individus disparaissent entièrement avec la selle à rebord relevé selon l'invention.

En effet, ne subsiste que la forme de diagramme en huit déplié (figures 25 et 27).

Par ailleurs, sur ces figures, on remarque la réduction notable des amplitudes entre les positions caractéristiques référencées par les lettres de A à D ou E, traduisant une économie réelle d'amplitude de mouvement, c'est-à-dire de travail et, par conséquent, une plus grande efficacité musculaire.

Cette réduction des amplitudes des mouvements est directement liée à la diminution des frottements sur la selle et de l'usure au niveau des articulations sollicitées.

Les dernières figures de 29 à 31 rendent également compte du rendement mécanique amélioré.

En effet, l'ensemble biomécanique de pédalage peut être ramené grossièrement à un équivalent mécanique simple de type bielle-manivelle.

Le mouvement sera d'autant plus efficace qu'il se rapprochera d'un mouvement de tête de bielle sans point mort dont le diagramme théorique est un cercle.

Ces figures montrent que l'utilisation de la selle selon l'invention permet d'obtenir une forme de diagramme le plus voisin possible de celle d'un cercle.

On se rend immédiatement compte de l'efficacité importante de la selle selon l'invention par la réduction notable de l'amplitude des mouvements nécessaires à un tour de pédalier et par la suppression des points morts. La fatigue au travail, l'usure des articulations et les frottements sur la selle en sont ainsi corrélativement diminués.

On donnera ci-après à titre illustratif et purement indicatif les dimensions moyennes pouvant convenir à un coureur classique de type européen :

longueur : 28 à 30 cm

largeur : 14 à 15 cm

hauteur totale de la selle : 11 à 15 cm

hauteur du rebord : 5 à 7 cm

par rapport au plan d'assise nu.

La longueur de la selle pourra être réduite en diminuant la longueur du bec.

Bien entendu, les dimensions et la courbure des concavités pourront varier légèrement.

Il va de soi, par ailleurs, que les dimensions d'une selle idéale doivent être personnalisées c'est-à-dire adaptées parfaitement aux dimensions et à la morphologie de l'utilisateur.

On a décrit ci-dessus une selle de hautes performances pour cycliste sportif. Il est entendu que la présente selle ne saurait se limiter à ce seul domaine mais pourra aussi bien équiper des vélos de cyclotourisme, des vélos fixes d'appartement et des vélos de rééducation fonctionnelle et bien d'autres vélos existants ou à créer, par exemple les bicyclettes du cyclisme artistique ou les vélos dits " tous terrains ".

Le rebord postérieur selon l'invention pourra également être spécialement étudié pour des courses contre la montre en ascension pure, ce qui éviterait le gaspillage énergétique du pédalage dit " en danseuse " en utilisant le maintien de l'appui que la selle apporte avantageusement.

L'invention a été décrite ci-dessus en détail. Il est bien entendu cependant que diverses modifications simples, adjonctions, variantes directes, substitutions par des moyens équivalents entrent dans le cadre de la présente protection comme précisé dans les revendications suivantes.

**Revendications**

1. Selle de hautes performances à appui musculaire fessier pour la pratique du sport cycliste, formée d'une coque (2) supportée par un châssis (1), coque présentant à son extrémité arrière un rebord arrière d'appui formé d'une seule pièce avec le corps de la selle, caractérisée en ce que le rebord arrière d'appui est un rebord arrière d'appui fessier anatomique et relevé (4) à contours arrondis et à extrémité médiane plus élevée, se raccordant progressivement à l'extrémité arrière de la selle, et qui se développe selon une direction générale perpendiculaire au plan défini par le corps de la selle, ledit rebord arrière anatomique et relevé (4) présentant sur son front avant un relief plus saillant vers le haut, symétrique en creux et en saillies par rapport à une zone médiane longitudinale saillante (6) à deux versants, relief formé à sa base de part et d'autre d'au moins deux concavités d'appui (17) et (18) et, en extrémité supérieure de la zone médiane longitudinale saillante (6), une saillie incurvée (8) dirigée vers l'avant de la selle, relief se développant vers le haut à partir d'une zone basse de raccordement (19) du rebord (4) avec le corps de la selle jusqu'à la saillie incurvée (8).

2. Selle selon la revendication 1, caractérisée en ce que le rebord relevé (4) présente une forme générale légèrement galbée vers l'avant de la selle.

3. Selle selon les revendications 1 et 2, caractérisée en ce que la zone médiane longitudinale (6) se développe selon une ligne de crête (7) se raccordant vers le bas à la zone générale médiane de tige de selle et terminée vers le haut par la saillie incurvée (8) formant un relief saillant sous la forme d'un coin supérieur médian (9) à flancs ou versants symétriques concaves (10) et (11) de courbures progressives et variables, coin s'évasant du bas vers le haut jusqu'à son raccordement avec le pourtour adjacent du rebord relevé.

4. Selle selon les revendications 1, 2, et 3 caractérisée en ce que les concavités d'appui (17) et (18) sont conformées légèrement en creux dans leur partie centrale formant ainsi chacune des cuvettes (27) et (28) et sont bordées latéralement et vers le haut par des surfaces de pourtour (29) et (30) constituant autant de zones progressives de raccordement avec les éléments adjacents du relief tels que la zone médiane longitudinale (6), les bases du coin supérieur médian (9), le contour supérieur du rebord (4) et la zone de raccordement (19).

5. Selle selon les revendications précédentes, caractérisée en ce que les axes des cuvettes (27) et (28) sont légèrement inclinés vers le bas par rapport à la verticale.

6. Selle selon les revendications précédentes, caractérisée en ce que le fond de chaque cuvette (27) et (28) des concavités d'appui (17) et (18) s'étend depuis la zone de raccordement (19) avec le corps de la selle et se prolonge vers le haut.

7. Selle selon les revendications précédentes, caractérisée en ce que la zone longitudinale médiane (6) en saillie affecte en relief et en coupes horizontales multiples la forme générale symétrique de la lettre grecque "epsilon" couchée transversalement à la selle et dirigée vers son extrémité avant, la partie centrale de cette lettre étant disposée et dirigée selon l'axe médian longitudinal de la selle.

8. Selle selon la revendication 1, caractérisée en ce que la forme en "epsilon" est évasée et s'évase progressivement du haut vers le bas.

9. Selle selon les revendications précédentes, caractérisée en ce que la zone longitudinale médiane (6) présente dans sa partie centrale deux versants (15) et (16) légèrement bombés concaves se raccordant latéralement chacun à une concavité d'appui (17) et (18).

10. Selle selon les revendications précédentes, caractérisée en ce que les formes des cuvettes des concavités d'appui (17) et (18) sont anatomiques, adaptées à servir de logement à chaque ischion enveloppé de façon dynamique par les muscles fessiers en action.

11. Selle selon la revendication 7, caractérisée en ce que le coin médian supérieur (9) présente une forme anatomique pour procurer une immobilisation latérale par logement dans l'espace interfessier (12) adjacent.

12. Selle selon les revendications précédentes, caractérisée en ce que la hauteur du rebord postérieur anatomique relevé (4) par rapport au plan d'assise est comprise entre 5 et 7 cm.

13. Selle selon les revendications précédentes, caractérisée en ce que le rebord postérieur anatomique relevé (4) forme une zone de plus forte épaisseur assurant la rigidité et la fixation sur le châssis.

## Claims

1. High-performance saddle with a support for the buttock muscles for the practice of sports cycling, formed by a shell (2) supported by a framework (1), this shell having at its rear end a rear supporting shoulder formed in one piece with the body of the saddle, characterised in that the rear supporting shoulder is a raised, anatomical rear shoulder (4) for supporting the buttocks, which shoulder has rounded contours and a higher medial end joining up progressively with the rear end of the saddle, and which spreads out in a general direction perpendicular to the plane defined by the body of the saddle, the said raised, anatomical rear shoulder (4) having on its front face a relief which projects further towards the top, is symmetrical in its hollows and projections relative to a projecting longitudinal medial zone (6) with two sides, which relief is formed at its base on either side by at least two supporting concavities (17) and (18) and, at the upper end of the projecting longitudinal medial zone (6), a dished projection (8) facing towards the front of the saddle, this relief spreading upwards from a low zone (19) where the shoulder (4) joins up with the body of the saddle, up to the dished projection (8).

2. Saddle according to claim 1, characterised in that the raised shoulder (4) has a general shape which is slightly curved towards the front of the saddle.

3. Saddle according to claims 1 and 2, characterised in that the longitudinal medial zone (6) spreads out along a ridge line (7) joining up towards the base with the general medial zone of the saddle pillar and ending towards the top in the dished projection (8) forming a projecting relief in the shape of an upper medial wedge (9) with symmetrical concave flanks or sides (10) and (11) having progressive, variable curves, this wedge widening out from the base upwards until it joins up with the adjacent periphery of the raised shoulder.

4. Saddle according to claims 1, 2 and 3, characterised in that the supporting concavities (17) and (18) are slightly hollow in shape in their central part, each of them thus forming cups (27) and (28), and are bordered on the sides and towards the top by peripheral surfaces (29) and (30) constituting so many zones of progressive joining to the adjacent elements of the relief such as the longitudinal medial zone (6), the bases of the upper medial wedge (9), the upper contour of the shoulder (4) and the joining zone (19).

5. Saddle according to the preceding claims, characterised in that the axes of the cups (27) and (28) slope slightly downwards relative to the vertical.

6. Saddle according to the preceding claims, characterised in that the base of each cup (27) and (28) of the supporting concavities (17) and (18) runs from the zone (19) of joining with the body of the saddle, and extends upwards.

7. Saddle according to the previous claims, characterised in that the projecting medial longitudinal zone (6) takes on, in relief and in multiple horizontal sections, the general symmetrical shape of the Greek letter "epsilon" lying transversely to the saddle and facing towards its front end, the central part of this letter being arranged and facing along the longitudinal medial axis of the saddle.

8. Saddle according to claim 1, characterised in that the "epsilon" shape is flared and widens out progressively from the top downwards.

9. Saddle according to the previous claims, characterised in that the medial longitudinal zone (6) has in its central part two concave, slightly bulged sides (15) and (16) each joining up laterally with a supporting concavity (17) and (18).

10. Saddle according to the preceding claims, characterised in that the shapes of the cups of the supporting concavities (17) and (18) are anatomical and suitable for serving to accommodate each ischium dynamically enveloped by the buttock muscles in action.

11. Saddle according to claim 7, characterised in that the upper medial wedge (9) has an anatomical shape for obtaining lateral immobilisation by lodging in the adjacent space (12) between the buttocks.

12. Saddle according to the preceding claims, characterised in that the height of the raised, anatomical rear shoulder (4) relative to the seating plane is between 5 and 7 cm.

13. Saddle according to the preceding claims, characterised in that the raised, anatomical rear shoulder (4) forms a zone of greater thickness, ensuring rigidity and attachment to the framework.

**Patentansprüche**

1. Hochleistungssattel mit Gesäßmuskelstütze zur Ausübung des Radsports, bestehend aus einer, von einem Gestell (1) getragenen Schale (2), wobei die Schale an ihrem hinteren Ende einen rückwärtigen Abstützrand aufweist, der mit dem Hauptteil des Sattels aus einem Stück hergestellt ist,
   **dadurch gekennzeichnet, daß**
   der rückwärtige Abstützrand eine anatomische und hochgebogene, rückwärtige Gesäßmuskelstütze (4) ist, mit abgerundeten Rändern und mit stärker angehobenem Mittelende, die ansteigend an das hintere Ende des Sattels anschließt und die sich in einer Hauptrichtung entwickelt, die senkrecht zu der, durch den Hauptteil des Sattels festgelegten Ebene steht, wobei der anatomische und hochgebogene rückwärtige Rand (4) auf seiner Vorderseite ein nach oben hin stärker vorspringendes Profil aufweist, das in seinen Vertiefungen und Vorsprüngen bezüglich einer längs verlaufenden, vorspringenden und mit zwei Flanken versehenen Mittelzone (6) symmetrisch ist, ein Profil, das an seiner Basis beiderseits von mindestens zwei Abstützvertiefungen (17, 18) gebildet ist; und am oberen Ende der längs verlaufenden vorspringenden Mittelzone (6) einen einwärts gekrümmten Vorsprung (8), der zum Vorderteil des Sattels hin gerichtet ist, und bei welchem sich das Profil, ausgehend von einer unteren Zone (19) für die Verbindung des Randes (4) mit dem Hauptteil des Sattels, bis zu dem einwärts gekrümmten Vorsprung (8) hin entwickelt.

2. Sattel nach Anspruch 1,
   **dadurch gekennzeichnet, daß**
   der hochgebogene Rand (4) eine leicht zum Vorderteil des Sattels hin ausgebauchte Gesamtform aufweist.

3. Sattel nach den Ansprüchen 1 und 2,
   **dadurch gekennzeichnet, daß**
   die längsgerichtete Mittelzone (6) sich nach einer Kammlinie (7) entwickelt, die sich nach unten an die allgemeine Mittelzone des Sattels anschließt und nach oben durch den einwärts gekrümmten Vorsprung (8) beendet ist, wobei letzterer ein vorspringendes Profil in Form eines oberen Mittelkeils (9) bildet, mit symmetrischen konkaven Flanken oder Schrägen (10) in fortschreitenden und variablen Krümmungen, ein Keil, der sich von unten nach oben weitet bis zu seiner Vereinigung mit der Kontur am hochgebogenen Rand.

4. Sattel nach den Ansprüchen 1, 2 und 3,
   **dadurch gekennzeichnet, daß**
   die Abstützvertiefungen (17, 18) in ihrem Mittelteil leicht ausgehöhlt sind, so daß beide Mulden (27, 28) bilden, die seitlich und nach oben durch die umgebenden Flächen (29, 30) begrenzt sind und ebenso Zonen allmählichen Übergangs zu den angrenzenden Profilelementen, wie etwa die längsgerichtete Mittelzone (6), die unteren Stellen des oberen Mittelkeils (9), die obere Randkontur (4) und die Verbindungszone (19).

5. Sattel nach den vorhergehenden Ansprüchen,
   **dadurch gekennzeichnet, daß**
   die Achsen der Mulden (27, 28) in bezug auf die Senkrechte leicht nach unten geneigt sind.

6. Sattel nach den vorhergehenden Ansprüchen,
   **dadurch gekennzeichnet, daß**
   sich der Boden jeder Mulde (27, 28) der Abstützvertiefungen (17, 18) von der Zone des Anschlusses (19) an den Hauptteil des Sattels aus erstreckt und sich nach oben fortsetzt.

7. Sattel nach den vorhergehenden Ansprüchen,
   **dadurch gekennzeichnet, daß**
   die längsgerichtete vorspringende Mittelzone (6) im Profil und in horizontalen Mehrfachschnitten die allgemeine symmetrische Form des griechischen Buchstabens "Epsilon" bildet, die quer zum Sattel liegt und zu seinem vorderen Ende hin gerichtet ist, wobei die Mitte dieses Buchstabens auf der längsgerichteten Mittelachse des Sattels angeordnet und ausgerichtet ist.

8. Sattel nach Anspruch 1,
   **dadurch gekennzeichnet, daß**
   die "Epsilon"-Form aufgeweitet ist und sich von oben nach unten zunehmend aufweitet.

9. Sattel nach den vorhergehenden Ansprüchen,
   **dadurch gekennzeichnet, daß**
   die längsgerichtete Mittelzone (6) in ihrem Mittelteil zwei leicht gewölbte und konkave Flanken (15, 16) aufweist, die sich jeweils an eine Abstützungsvertiefung (17, 18) anschließen.

10. Sattel nach den vorhergehenden Ansprüchen,
    **dadurch gekennzeichnet, daß**
    die Mulden der Abstützungsvertiefungen (17, 18) anatomisch geformt und so angepaßt sind, daß sie zur Lagerung jedes, dynamisch von den in Aktion befindlichen Hinterbackenmuskeln umschlossenen Sitzbeins dienen können.

11. Sattel nach Anspruch 7,
   **dadurch gekennzeichnet,** daß
   der obere Mittelkeil (9) eine anatomische Form aufweist um ein seitliches Festhalten durch Lagerung in dem anliegenden Raum (12) zwischen den Hinterbacken zu bewirken.

12. Sattel nach den vorhergehenden Ansprüchen,
   **dadurch gekennzeichnet,** daß
   die Höhe des hinteren aufgebogenen anatomischen Randes (4) bezüglich der Sitzfläche zwischen 5 und 7 cm beträgt.

13. Sattel nach den vorhergehenden Ansprüchen,
   **dadurch gekennzeichnet,** daß
   der hintere aufgebogene anatomische Rand (4) eine Zone mit stärkerer Dicke bildet um die Steifigkeit und die Befestigung auf dem Gestell zu gewährleisten.

FIG.1

FIG.2a

FIG.2b

FIG.3

FIG 4

FIG 5

FIG 6

FIG 7

FIG 8

FIG 9

FIG 10

# FIG 11

# FIG 12

FIG 13

FIG 14

FIG 15

# FIG 16 A

# FIG 16 B

FIG.17

FIG.18

FIG 19

FIG 20

EP 0 286 559 B1

## FIG 21

## FIG 22

FIG.23

FIG.24

FIG.25

FIG.26

FIG.27

FIG.28

C
D
B
A

325°

20°

215°

145°

FIG.29

FIG.30

# FIG.31